# EUROPÄISCHE PATENTANMELDUNG

(11) **EP 1 588 959 A1**
(43) Veröffentlichungstag der Anmeldung: **26.10.2005**
(21) Anmeldenummer: 04011748.3
(22) Anmeldetag: 18.05.2004
(51) Int. Cl.: B65G 19/24, B65G 19/14

(54) **Seilscheiben-Bausatz für Fördermittel, insbesondere Rohr-Seilscheibenförderer**

(30) Priorität: 19.04.2004 DE 202004006335 U
(71) Anmelder: Schnyder GmbH & Co. KG, 67346 Speyer (DE)
(72) Erfinder: Schied, Nikolaus, 67346 Speyer (DE)
(74) Vertreter: Hermann, Wolf-Dieter

(57) **Zusammenfassung**

Aufgabe der Erfindung ist es, einen einfachen und kostengünstigen Seilscheiben-Bausatz für Seilscheibenförderer zu schaffen, mittels dessen die Gefahr der Rückstandsbildung und Verkeimung des Förderguts verringert sowie das Risiko des Eintrags von Fremdmaterialien ins Fördergut sicher vermieden werden kann.

Erfindungsgemäß wird vorgeschlagen, dass bei einem gattungsgemäßen Seilscheiben-Bausatz für einen Rohr-Seilscheibenförderer die erste Nabe (2.1) im Bereich der ersten Nabenfläche (7) materialeinheitlich und einstückig mit der ersten Seitenfläche (5) der Scheibe (3) zu einer ersten Seilscheiben-Komponente (S1) verbunden ist, dass die zweite Nabe (2.2) im Bereich ihrer auf der zweiten Seitenfläche (6) der Scheibe (3) zum Aufliegen kommenden zweiten Nabenfläche (8) unter Ausbildung einer zweiten Seilscheiben-Komponente (S2) eine axial vorkragende Rastvorrichtung (11) aufweist, dass zur Ermöglichung einer Schnappverbindung zwischen den Seilscheiben-Komponenten (S1,S2) in Teilen der Scheibe (3) und/oder in Teilen der ersten Nabe (2.1) eine nach Montage des Bausatzes (S1,S2) mit Teilen der Rastvorrichtung formschlüssig zum Eingriff gelangende Gegenrastvorrichtung ausgebildet ist und dass Teile der Scheibe (3) und/oder der ersten Nabe (2.1) und/oder der zweiten Nabe (2.2) so ausgebildet sind, dass sie zur Herstellung eines Kraftschlusses vom Seilscheiben-Seil (1) über den jeweiligen Tragkörper auf die Seilscheibe (S) eine mindestens teilweise formschlüssige Aufnahme der Tragkörper vorsehen.

## Beschreibung

Die Erfindung betrifft einen Seilscheiben-Bausatz zum Aufbau eines Seilscheiben tragenden Seilscheiben-Seils eines Fördermittels zum Fördern von Schüttgut, insbesondere eines Rohr-Seilscheibenförderers, nach dem Oberbegriff des Anspruchs 1.

Rohr-Seilscheibenförderer dienen vorzugsweise als Stetigförderer in der Lebensmittelindustrie, der pharmazeutischen und der chemischen Industrie zur staubdichten, aero-mechanischen oder mechanischen Förderung von feinteiligem und rieselfähigem , insbesondere staubartigem, pulverförmigem oder körnigem Schüttgut, wie z.B. Kunststoff-Granulat, Pulver, Mehl, Tee, Kakao oder Zucker.

Seilscheibenförderer werden in Abhängigkeit von den Einsatzbedingungen als Langsamläufer oder Schnellläufer gefahren, wobei Materialaufgabe- und Materialauslassöffnungen sehr variabel positioniert werden können.

Die Beschickung von stetig mit Schüttgut zu beladenden Tankwagen, Silofahrzeugen oder Speichersilos erfolgt häufig mit Scheibenförderern des Systems Scheibe- in- Rohr.

Derartige Rohr-Seilscheibenförderer weisen im wesentlichen eine unterschiedlichsten, insbesondere räumlich begrenzten Einbausituationen und spezifischen Standortbedingungen äußerst flexibel anpassbare geschlossene Konstruktion aus Förderrohren auf, innerhalb derer ein in gleichmäßigen Abständen mit Seilscheiben bestücktes Förderseil axial angeordnet ist und vorgespannt zwischen Umlenkrädern umläuft.

Aufgrund der unter Ausbildung eines Ringspalts von ca. 5mm zur Innenwand des Förderrohrs , d.h. ohne Wandkontakt lose ins Förderrohr passenden Seilscheiben, die mit einer relativ hohen linearen Geschwindigkeit nach Art eines Scheibenkolbens im Förderrohr umlaufen, wird die Luft im Förderrohr verdrängt und das Fördergut im wesentlichen aero-mechanisch durch den vom Förderseil erzeugten Luftstrom mitbefördert. Hierbei wird jedes Teilchen von Luft umgeben, wodurch eine verfahrenstechnisch anzustrebende gute Fluidisierung des Förderguts erreicht wird.

Seilscheiben werden entweder einteilig auf das Förderseil aufgegossen oder mehrteilig aus Komponenten zusammengesetzt.

Aufgegossene Seilscheiben sind fertigungstechnisch vergleichsweise schwierig herzustellen und können aufgrund der starren, spielfreien Verbindung mit dem Förderseil während des Fördervorgangs auf Dauer nicht der fortwährenden Biegung des Förderseils folgen. Hierdurch kommt es zu Beschädigungen der einzelnen Seilscheiben.

Mehrteilige Seilscheiben weisen bauartbedingt den grundsätzlichen Nachteil auf, dass die Verbindungselemente selbst oder zumindest Teile davon sich lösen, abbrechen oder abspanen können. Die hierbei resultierende Verunreinigung des Förderguts ist äußerst unenivünscht.

Zudem stellt das Anbringen gesonderter Verbindungselemente einen zusätzlichen Materialaufwand sowie einen zusätzlichen Verfahrensschritt dar.

Es kann an herausragenden Teilen der Verbindungselemente zur Anhaftung oder Anlagerung von Fördergut kommen. Je nach Beschaffenheit des Förderguts können dann in Abhängigkeit von Temperatur und Feuchtigkeit organische Zerfallsprozesse in Gang gesetzt werden, welche das Fördergut verunreinigen können. Zur vorsorglichen Vermeidung sind deshalb aufwendige und kostenintensive Reinigungsmaßnahmen erforderlich.

Ein gattungsgemäßer Seilscheiben-Bausatz für Scheibenförderer ist aus der Europäischen Patentschrift EP 0 988 242 bekannt.

Hierbei ist jedoch nachteilig, dass die einzelnen die Seilscheibe aufbauenden Komponenten durch mechanische Verbindungselemente, wie Stifte, Schrauben oder Nieten zusammengehalten werden und deshalb die vorgenannten, im Stand der Technik bekannten Nachteile auftreten können.

Aufgabe der Erfindung ist es daher, gegenüber dem im Stand der Technik bekannten Seilscheiben-Bausatz einen einfacheren und kostengünstigeren Seilscheiben-Bausatz für Fördermittel, insbesondere für Seilscheibenförderer zu schaffen, mittels dessen unter Vermeidung der Nachteile des Standes der Technik die Gefahr der Rückstandsbildung und Verkeimung des Förderguts verringert sowie das Risiko des Eintrags insbesondere metallischer Fremdmaterialien ins Fördergut sicher vermieden werden kann.

Diese Aufgabe wird erfindungsgemäß dadurch gelöst, dass bei einem gattungsgemäßen Seilscheiben-Bausatz für ein Fördermittel, insbesondere einen Rohr-Seilscheibenförderer die erste Nabe im Bereich der ersten Nabenfläche materialeinheitlich und einstückig mit der ersten Seitenfläche der Scheibe zu einer ersten Seilscheiben-Komponente verbunden ist, dass die zweite Nabe im Bereich ihrer auf der zweiten Seitenfläche der Scheibe zum Aufliegen kommenden zweiten Nabenfläche unter Ausbildung einer zweiten Seilscheiben-Komponente eine axial vorkragende Rastvorrichtung aufweist, dass zur Ermöglichung einer Schnappverbindung zwischen den Seilscheiben-Komponenten in Teilen der Scheibe und / oder in Teilen der ersten Nabe eine nach Montage des Bausatzes mit Teilen der Rastvorrichtung formschlüssig zum Eingriff gelangende Gegenrastvorrichtung ausgebildet ist und dass Teile der Scheibe und / oder der ersten Nabe und/oder der zweiten Nabe so ausgebildet sind, dass sie zur Herstellung eines Kraftschlusses vom Seilscheiben-Seil über den jeweiligen Tragkörper auf die Seilscheibe eine mindestens teilweise formschlüssige Aufnahme der Tragkörper vorsehen.

Hierbei ist besonders vorteilhaft, dass der erfindungsgemäße Seilscheiben-Bausatz völlig ohne gesonderte Verbindungselemente, wie z.B. Nieten, auskommt.

Aufgrund der fehlenden Verbindungselemente ist die Oberfläche der Seilscheibe glatter und somit unanfälliger für die Anhaftung von Fördergut.

Hieraus resultiert auch ein geringerer Reinigungsbedarf sowie ein insgesamt geringerer Reinigungsaufwand.

Ferner weist der erfindungsgemäße Seilscheiben-Bausatz lediglich zwei aus Kunststoff vorgefertigte Komponenten auf. Diese beiden Komponenten können im Fertigungsprozess sehr einfach auf einem mit verpressten Seilnippeln zu versehenden Förderseil aufgebaut werden, wobei die Seilnippel als Tragkörper für die Seilscheiben dienen. Die beiden Einzelkomponenten müssen nurmehr jeweils abwechselnd zwischen zwei Seilnippel auf das Förderseil aufgefädelt werden und können dann durch beiderseitige axiale Druckbeaufschlagung mittels Schnappverbindung im Wege der Verrastung um den Seilnippel herum dicht zusammengefügt werden. Hierdurch wird eine einerseits spielbehaftete, andererseits aber dennoch sicher stabile und zerstörungsfrei nicht mehr lösbare, feste und dichte, formschlüssige sowie materialeinheitliche Verbindung gewährleistet, die den, insbesondere in der chemischen, pharmazeutischen und Lebensmittelindustrie zu stellenden hohen Anforderungen hinsichtlich Reinheit, Hygiene und Produktschonung gerecht wird.

Weitere Merkmale und Vorteile der Erfindung ergeben sich ohne Beschränkung der Allgemeinheit aus der nachfolgenden Beschreibung eines beispielhaften Ausführungsbeispiels.

Hierbei zeigt:
Figur 1 eine Seitenansicht eines Ausführungsbeispiels einer mit dem erfindungsgemäßen Seilscheiben-Bausatzes zu verbauenden Seilscheibe vor der Montage,
Figur 2 eine axial-mediane Schnittansicht eines Ausführungsbeispiels einer mit dem erfindungsgemäßen Seilscheiben-Bausatzes zu verbauenden Seilscheibe vor der Montage,
Figur 3 eine Detailansicht B nach Figur 2 der axial-medianen Schnittansicht eines Ausführungsbeispiels einer mit dem erfindungsgemäßen Seilscheiben-Bausatzes zu verbauenden Seilscheibe vor der Montage,
Figur 4 eine Seitenansicht eines Ausführungsbeispiels einer mit dem erfindungsgemäßen Seilscheiben-Bausatzes zu verbauenden Seilscheibe nach der Montage,
Figur 5 eine axial-mediane Schnittansicht eines Ausführungsbeispiels einer mit dem erfindungsgemäßen Seilscheiben-Bausatzes zu verbauenden Seilscheibe nach der Montage,
Figur 6 eine Detailansicht B nach Figur 5 der axial-medianen Schnittansicht eines Ausführungsbeispiels einer mit dem erfindungsgemäßen Seilscheiben-Bausatzes zu verbauenden Seilscheibe nach der Montage.

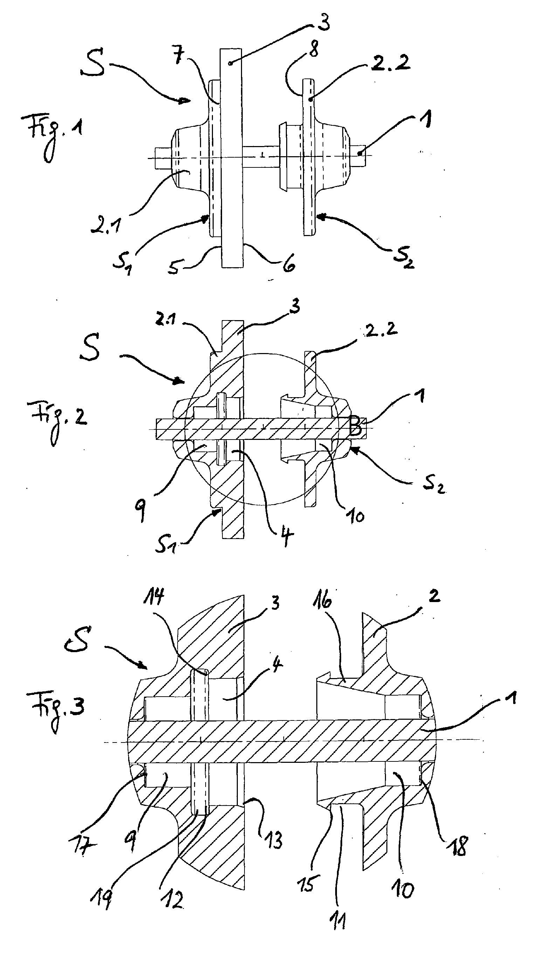

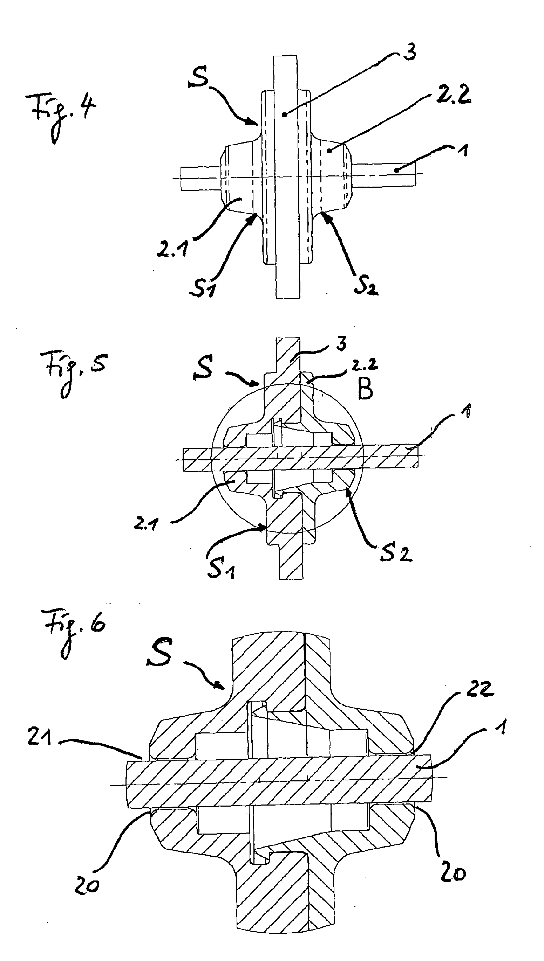

Die Figuren 1,2,3 zeigen ein Ausführungsbeispiel einer mit dem erfindungsgemäßen Seilscheiben-Bausatzes mit einer ersten Seilscheiben-Komponente S1 sowie einer zweiten Seilscheiben-Komponente S2 auf einem vorzugsweise als Drahtseil ausgebildeten Förderseil 1 über einem nicht abgebildeten Tragkörper aufzubauenden Seilscheibe S vor der Montage. Der Tragkörper ist als metallischer, mit dem Förderseil 1 ortsfest verpresster Seilnippel ausgestaltet, der nach der Zusammenfügung der Seilscheiben-Komponenten S1,S2 zur Seilscheibe S die Kraftübertragung vom Förderseil 1 auf die Seilscheibe S gewährleisten soll. Der Tragkörper selbst kann verschiedene Raumformen annehmen, wird in aller Regel jedoch, wie auch vorliegend als im wesentlichen rotationssymmetrischer Kreis-Vollzylinder ausgestaltet, der mit seinen Deckflächen an einer ersten Anschlagschulter 17 einer ersten Ausnehmung 9 einer ersten Nabe 2.1 sowie an einer zweiten Anschlagschulter 18 einer zweiten Ausnehmung 10 einer zweiten Nabe 2.1 das Förderseil 1 umgebend, vorzugsweise mit geringem Axialspiel axial anliegt und in den Ausnehmungen 9,10 sowie einer Zentralausnehmung 4 einer Scheibe 3 so einliegt, dass nach Zusammenbau der Seilscheiben-Komponenten S1,S2 zur Seilscheibe S vorzugsweise eine freie Drehbarkeit der Seilscheibe 3 um den Tragkörper gewährleistet ist.

Die Seilscheiben-Komponente S1 weist die als Mitnehmerscheibe ausgeformte Scheibe 3 nebst erster Seitenfläche 5 und zweiter Seitenfläche 6 auf, wobei an der ersten Seitenfläche 5 die im wesentlichen hutförmige oder glockenförmige erste Nabe 2.1 materialeinheitlich einstückig angeformt ist. Innerhalb der ersten Nabe 2.1 ist innerhalb der ersten Ausnehmung 9 zwecks Aufnahme des kreiszylindrisch ausgebildeten Tragkörpers ein ebenfalls kreiszylindrisch ausgeformter Bereich nebst erster Anschlagschulter 17 für den Tragkörper sowie zwecks Aufnahme einer peripher umlaufenden Rastnase 15 einer an der zweiten Nabe 2.2 angeordneten Rastvorrichtung 11 eine ebenfalls peripher umlaufende Rastnut 19 nebst senkrecht zur Förderachse 1 verlaufender Rastschulter 14 ausgeformt . Hierbei kann die Rastschulter 14 auch in Teilen der Scheibe 3 zu liegen kommen. Ferner ist die Zentralausnehmung 4 nebst Auflaufschräge 13 innerhalb der Scheibe 3 so ausgeformt, dass sie sowohl den das Förderseil 1 umgebenden Tragkörper als auch den Materialbereich eines Rasttubus 16 der an der Nabe 2.2 ausgebildeten Rastvorrichtung 11 aufnimmt.

Die Seilscheiben-Komponente S2 weist die ebenfalls im wesentlichen hutförige oder glockenförmige Nabe 2.2 auf, wobei an einer zweiten Nabenfläche 8 der rohransatzförmig gestaltete Rasttubus 16 nebst vorzugsweise peripher umlaufend ausgebildeter Rastnase 15 materialeinheitlich einstückig angeformt ist. Innerhalb der zweiten Nabe 2.2 ist innerhalb der zweiten Ausnehmung 10 zwecks Aufnahme des kreiszylindrisch ausgebildeten Tragkörpers ein ebenfalls kreiszylindrisch ausgeformter Bereich nebst zweiter Anschlagschulter 18 für den Tragkörper ausgebildet. Zwecks Aufnahme und Durchführung des Förderseils 1 weisen die Naben 2.1,2.2 eine jeweils axial-lateral angeordnete sowie zwecks Ermöglichung einer verschleißfreien Seilbiegung mit Kantenrundungen 20 versehene sowie zwecks Vermeidung von Förderguteintrag in den Innenraum der Seilscheibe S eine jeweils möglichst eng schließende erste SeilDurchlassöffnung 21 an der ersten Nabe 2.1 sowie eine zweite SeilDurchlassöffnung 22 an der zweiten Nabe 2.2 auf.

Die Figuren 4,5,6 zeigen das Ausführungsbeispiel einer mit dem erfindungsgemäßen Seilscheiben-Bausatzes mit der ersten Seilscheiben-Komponente S1 sowie der zweiten Seilscheiben-Komponente S2 auf dem Förderseil 1 aufzubauenden Seilscheibe S nach der Montage. Hierbei sind unter formschlüssiger Aufnahme des Rasttubus 16 nebst Rastnase 15 der Rastvorrichtung 11 innerhalb der ersten Seilscheiben-Komponente S1 und Verrastung mit der Rastnut 19 nebst Rastschulter 14 der Gegenrastvorrichtung 12 die Seilscheiben-Komponenten S1,S2 mittels Schnapp- Verbindung zur erfindungsgemäßen Seilscheibe S formschlüssig gefügt.

### Bezugszeichenliste

- 1: Förderseil
- 2.1: Erste Nabe
- 2.2: Zweite Nabe
- 3: Scheibe
- 4: Zentralausnehmung von 3
- 5: Erste Seitenfläche von 3
- 6: Zweite Seitenfläche von 3
- 7: Erste Nabenfläche von 2.1
- 8: Zweite Nabenfläche von 2.2
- 9: Erste Ausnehmung von 2.1
- 10: Zweite Ausnehmung von 2.2
- 11: Rastvorrichtung
- 12: Gegenrastvorrichtung
- 13: Auflaufschräge
- 14: Rastschulter
- 15: Rastnase
- 16: Rasttubus
- 17: Erste Anschlagschulter in 2.1
- 18: Zweite Anschlagschulter in 2.2
- 19: Rastnut
- 20: Kantenrundung
- 21: Erste Seildurchlassöffnung
- 22: Zweite Seildurchlassöffnung

- S1: erste Seilscheiben-Komponente
- S2: zweite Seilscheiben-Komponente
- S: erfindungsgemäße Seilscheibe

## Patentansprüche

1. Seilscheiben-Bausatz zum Aufbau eines Seilscheiben auf ortsfesten Tragkörpern tragenden Seilscheiben-Seils (1) eines Fördermittels zum Fördern von Schüttgut, insbesondere eines Rohr-Seilscheibenförderers, mit einer eine Zentralausnehmung (4) aufweisenden Scheibe (3) mit einer ersten Seitenfläche (5) und einer zweiten Seitenfläche (6), mit einer eine erste Ausnehmung (9) sowie eine erste Nabenfläche (7) aufweisenden und auf einer ersten Seitenfläche (5) der Scheibe (3) lateral anzuordnenden ersten Nabe (2.1), mit einer eine zweite Ausnehmung (10) sowie eine zweite Nabenfläche (8) aufweisenden und auf einer zweiten Seitenfläche (6) der Scheibe (3) lateral anzuordnenden zweiten Nabe (2.2), wobei jede der Scheibe (3) unmittelbar benachbart angeordnete Nabe (2.1,2.2) mit dieser Scheibe (3) zu einer Seilscheibe fest verbunden werden kann, **dadurch gekennzeichnet, dass** die erste Nabe (2.1) im Bereich der ersten Nabenfläche (7) materialeinheitlich und einstückig mit der ersten Seitenfläche (5) der Scheibe (3) zu einer ersten Seilscheiben-Komponente (S1) verbunden ist, dass die zweite Nabe (2.2) im Bereich ihrer auf der zweiten Seitenfläche (6) der Scheibe (3) zum Aufliegen kommenden zweiten Nabenfläche (8) unter Ausbildung einer zweiten Seilscheiben-Komponente (S2) eine axial vorkragende Rastvorrichtung (11) aufweist, dass zur Ermöglichung einer Schnappverbindung zwischen den Seilscheiben-Komponenten (S1,S2) in Teilen der Scheibe (3) und / oder in Teilen der ersten Nabe (2.1) eine nach Montage des Bausatzes (S1,S2) mit Teilen der Rastvorrichtung (11) formschlüssig zum Eingriff gelangende Gegenrastvorrichtung (12) ausgebildet ist und dass Teile der Scheibe (3) und / oder der ersten Nabe (2.1) und/oder der zweiten Nabe (2.2) so ausgebildet sind, dass sie zur Herstellung eines Kraftschlusses vom Seilscheiben-Seil (1) über den jeweiligen Tragkörper auf die aus der ersten Seilscheiben-Komponente (S1) sowie der zweiten Seilscheiben-Komponente (S2) gefügte Seilscheibe (S) eine mindestens teilweise formschlüssige Aufnahme der Tragkörper vorsehen.

2. Seilscheiben-Bausatz nach Anspruch 1, **dadurch gekennzeichnet, dass** die Naben (2.1,2.2) hutförmig oder glockenförmig ausgebildet sind.

3. Seilscheiben-Bausatz nach Anspruch 1 oder 2, **dadurch gekennzeichnet, dass** die Rastvorrichtung (11) durch einen an der zweiten Nabe (2.2) materialeinheitlich einstückig angeformten Rasttubus (16) nebst peripher umlaufender , federnd- elastischer Rastnase (15) gebildet ist.

4. Seilscheiben-Bausatz nach einem der vorhergehenden Ansprüche, **dadurch gekennzeichnet, dass** unter gleichzeitiger Ausbildung einer die Aufnahme der Rastvorrichtung (11) erleichternden Auflaufschräge (13) an Teilen der Scheibe (3) die Gegenrastvorrichtung (12) als die Rastnase (15) formschlüssig aufnehmende peripher umlaufende Rastschulter (14) ausgeformt ist.

5. Seilscheiben-Bausatz nach einem der vorhergehenden Ansprüche, **dadurch gekennzeichnet, dass** die in Teilen der Scheibe (3) und der ersten Nabe (2.1) und der zweiten Nabe (2.2) ausgebildeten Ausnehmungen (4,9,10) unter Ausbildung einer zur Richtung des Förderseils (1) senkrecht verlaufenden ersten Anschlagschulter (17) in der ersten Nabe (2.1) sowie einer zur Richtung des Förderseils (1) senkrecht verlaufenden zweiten Anschlagschulter (18) in der zweiten Nabe (2.1) so ausgeformt sind, dass die formschlüssige Aufnahme und Umfassung eines vorzugsweise vollzylindrischen Tragkörpers ermöglicht ist.

6. Seilscheiben-Seil eines Fördermittels zum Fördern von Schüttgut, insbesondere eines Rohr-Seilscheibenförderers, **dadurch gekennzeichnet, dass** es mindestens eine nach dem Seilscheiben-Bausatz einer der vorhergehenden Ansprüche aufgebaute Seilscheibe (S) aus einer ersten Seilscheiben-Komponente (S1) sowie einer zweiten Seilscheiben-Komponente (S2) aufweist.
